# EUROPEAN PATENT SPECIFICATION

(11) **EP 3 835 632 B1**
(45) Date of publication and mention of the grant of the patent: **16.11.2022**
(21) Application number: 20213434.2
(22) Date of filing: 11.12.2020
(51) Int. Cl.: F16K 5/06, F16K 5/10, F16K 31/60, F16K 15/18, F16K 35/10

(54) **VALVE EQUIPPED WITH A BYPASS CHANNEL**
VENTIL MIT BYPASSKANAL
SOUPAPE AVEC CONDUIT DE DÉRIVATION

(30) Priority: 12.12.2019 IT 201900023862
(43) Date of publication of application: 16.06.2021
(73) Proprietor: Greiner S.p.A., 25065 Lumezzane (BS) (IT)
(72) Inventor: LENA, Roberto, 25065 Lumezzane (BS) (IT); ASTORI, Giorgio Mario, 25065 Lumezzane (BS) (IT)
(74) Representative: Marietti, Andrea

(56) References cited:
- EP-A1- 2 626 605
- EP-B1- 2 626 605
- CN-A- 102 889 394
- US-B2- 10 107 406

## Description

The present invention concerns a valve, preferably a ball valve, for the shutting off of a fluid flow in piping. In particular, the present invention relates to a shut-off valve shaped to guarantee that a quantity of fluid passes through it even if the valve is in the closed position.

It is useful from the outset to note that the valve according to the present invention can be used with any type of fluid, both liquids and gases, although it is particularly suitable for use in piping for conveying and distributing water.

Shut-off valves equipped with a plug, for example of the ball type, having a conduit passing through it, which is movable within a cavity or housing of the valve body to shut off or allow fluid to pass therethrough, are now commercially available.

In fact, the plug is equipped with a usually straight through conduit, which has an inlet opening and an outlet opening, and which is rotated by a suitable driving shaft between a closed position of the valve and an open position, and vice versa. In the closed position of the valve, the passage through the conduit of the plug is prevented, whereas in the open position of the valve the plug, through the conduit passing through it, puts in fluidic communication the inlet opening and the outlet opening of the valve, to which piping, or similar means for conveying fluids, placed upstream and downstream of the valve, respectively, are connected.

When the valve is closed, the through conduit of the plug is placed in such a way as to have its axis in a direction substantially perpendicular to the axis defined by the inlet and outlet openings of the valve, in such a way as to prevent the fluid from flowing through it. The valve can be locked in a closed position, i.e. in a fluid stop position, for example to carry out maintenance services downstream of the valve or else to stop the supply of the fluid to the user or users who are served by the piping placed downstream of the shut-off valve.

In fact in water supply plants and in particular drinking water for domestic or industrial use, where the user has not paid what is due in relation to the service provided, the supply provider is authorised to interrupt the water flow supplied to the user by closing the shut-off valve placed upstream of the defaulting user's plant.

The requirements imposed by the World Health Organization recommend that in the event of interruption of the water supply to a defaulting user, a minimum quantity of fluid, necessary to meet at least the primary needs of the defaulting user, is anyway to be guaranteed.

For this reason, shut-off valves have been developed and marketed allowing a minimum quantity of flow to pass even when the valve is in the closed position, and therefore the passage of fluid through the valve is obstructed by the plug. It should be noted that the following expressions "minimum quantity of fluid" or "guaranteed minimum flow" are intended to indicate the quantity of fluid that the valve allows (guarantees) to pass from upstream to downstream thereof even when the same valve is in the closed position, and the passage through the plug is restricted.

The Italian patent application BS2005A000161 describes a valve in which the plug is movable in a fully open position of the valve and in a limited open position in which a minimum quantity of fluid is guaranteed to pass through grooves that are present on a piston for controlling the fluid flow, which is installed in the ball plug of the valve.

It should be noted that the presence of a flow control piston placed inside the ball plug causes considerable disadvantages in that it leads to considerable load losses when the ball plug is placed in the fully open position of the valve. In fact, in this position, the load loss generated by the piston installed inside the ball plug does not allow to have the maximum fluid flow through the valve.

Furthermore, valves of the known type, such as for example the one described in the Italian patent application BS2005A000161, while allowing a minimum quantity of fluid to pass when the valve is in the closed position, do not offer the possibility of controlling the fluid flow rate passing through the valve when the latter is closed. In other words, it is not possible to regulate the minimum quantity of fluid (guaranteed minimum flow) except as a result of the onerous replacement of the valve.

A fluid flow shut-off valve according to the preamble of claim 1 is known from EP2626605A1.

Object of the present invention is to provide a fluid flow shut-off valve, which is capable of ensuring a quantity of fluid (guaranteed minimum flow) to pass, even when the valve is in the closed position, which does not suffer from problems of valves known in the art briefly discussed above, such as for example those related to load losses when the valve is open.

Further object of the present invention is to provide a shut-off valve, which is simple and cheap to implement and which further allows to regulate the quantity of fluid passing through the valve when the latter is in the closed position.

Further object of the present invention is to provide a valve, whose closed state with minimum passage of fluid is not easily reversible for an ordinary user.

These and other purposes are achieved through the valve for shutting off the flow of a fluid according to one or more of the accompanying claims.

A particular object of the present invention is a valve according to claim 1. Preferred aspects are set forth in the dependent claims.

According to a possible aspect, the present invention comprises a main valve body equipped with at least one first conduit and at least one second conduit, at least one plug equipped with at least one conduit passing inside it and rotatably housed in a cavity of the valve body for its rotation between at least one open position of the valve and at least one closed position of the valve.

Furthermore, the valve according to the present invention comprises at least one bypass channel for the direct or indirect fluidic connection of the first conduit with the second conduit of the valve, at least when the plug is in at least one closed position of the valve.

In the at least one closed position of the valve, the plug connects the first conduit fluidically with the cavity in which the plug is housed; the bypass channel in turn fluidically connects the second conduit with the cavity, in which there is a flow cut-off and/or regulation element inside the bypass channel, which is housed in a respective seat having a first end on said valve body. The valve also has a shaft for driving the plug, and a covering cap of the driving shaft constrained to the valve body. In at least one position of the plug, the covering cap covers at least partially the first end of the seat of the cut-off and/or regulation element.

In the closed position, therefore, the fluid cannot flow between the first and second conduits by passing through the plug. In particular, the fluid can enter the plug but not exit from it directly at the first or second conduit, depending on the direction of the fluid flow. The fluidic communication between the first and second conduits is therefore not guaranteed by the plug but occurs by means of the bypass channel, which is connected to the second conduit. The cut-off and/or regulation element allows to regulate the quantity of fluid passing through the bypass channel. Such regulation can also be such as to completely prevent the fluid flow, so that in the closed position of the valve, the fluid flow is completely prevented. In its simplest shape, the cut-off and/or regulation element can be configured so as to be able to prevent and allow only selectively the fluid to pass within the bypass channel. Different embodiments further allow to modulate the quantity of fluid passing through the bypass channel.

In general, the regulation of the cut-off and/or regulation element allows to vary the fluid flow passing through the valve. In particular, the presence of a bypass channel connecting the first conduit to the second conduit of the valve allows to guarantee that a minimum quantity of fluid, or guaranteed minimum flow, passes downstream of the valve without substantial generation of load losses, even when the valve is closed. In fact, the valve according to the present invention does not have flow control means placed inside the plug, as instead it occurs in valves of known type, for example the piston equipped with grooves, which is housed inside the plug of the valve described in the application BS2005A000161. The absence of such elements does not generate load losses inside the valve plug which consequently, when it is placed in the fully open position, causes the passage of the maximum flow of fluid.

According to an aspect of the present invention, the bypass channel is made at least partially within the valve body, meaning that the dimensions of the valve are not increased due to the presence of the bypass channel.

According to a possible aspect, the flow cut-off and/or regulation element comprises at least one grub screw adapted to at least partially obstruct the passage section of the bypass channel. Typically, the grub screw is threaded, as well as the respective seat.

According to a possible aspect, the covering cap is constrained to a device for actuating the driving shaft, preferably in the form of aknob. Typically, the covering cap and actuating device are made of a single piece.

According to a possible aspect, the axis of the seat for the cut-off and/or regulation element is arranged substantially parallel to the axis of the actuating shaft.

According to a possible aspect, the cap at least partially covers the cut-off and/or regulation element in all positions of the plug.

In particular, according to a possible aspect, the covering cap covers at least 50%, preferably at least 70% of the end of said seat.

According to a possible aspect, accessibility to the seat of the cut-off and/or regulation element is allowed only upon removal of the covering cap (and consequently, generally also of the knob) from the valve body.

Such removal is typically only possible through a tool that is only owned by an operator and not commercially available.

According to a possible aspect, the valve comprises a device for selectively shutting off the fluid flow in the valve. Such shut-off device allows the fluid to pass in one direction inside said valve and prevents it from passing in the opposite direction.

Preferably, such device for selectively shutting off the fluid flow is arranged downstream of the plug.

According to an aspect of the present invention, the plug comprises at least two openings defining the through conduit inside it and, according to a preferred embodiment, the plug is equipped with three openings; preferably, the openings are arranged so as to define a substantially "T"-shaped path inside the plug. According to the latter embodiment, in the closed position of the valve, the plug prevents the fluid from passing in the second conduit and at the same time, through the inner path defined by the openings, fluidically connects the first conduit of the valve with the cavity within which the plug is housed. As stated, the bypass channel determines the fluidic connection of the cavity within which the plug is housed with the second conduit, by indirectly and fluidically connecting the first conduit of the valve with its second conduit.

The valve according to the present invention can be used in the water distribution piping and advantageously, if it is closed to stop the supply to a defaulting user, it allows to provide a minimum quantity of flow through the bypass channel, necessary to satisfy the primary needs.

These and other advantages will be apparent from the following description and from the accompanying figures, disclosed herein by way of non-limiting example, wherein:

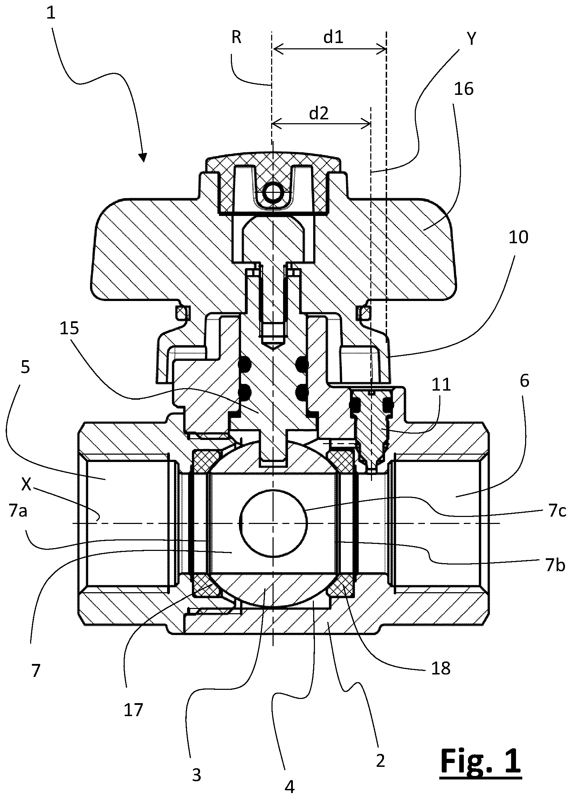

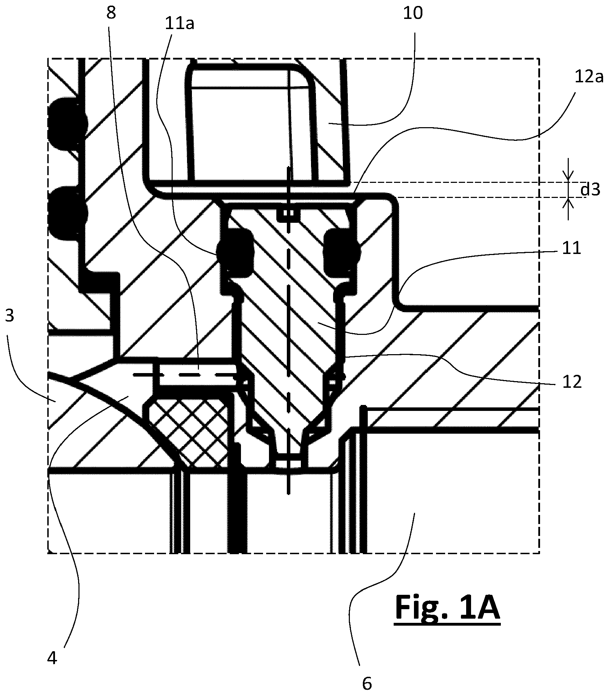

- figure 1 shows a sectional side view of a first embodiment of the valve according to the present invention;
- figure 1A shows an enlarged detail of figure 1;
- figures 2A and 2B are two sectional views taken along the plane of figure 1, showing the valve in a first closed position and in a second closed position, respectively;
- figure 3 is a sectional side view of an alternative embodiment of the valve of figure 1;
- figure 3A shows an enlarged detail of figure 3.

A valve 1 for shutting off the flow of a fluid according to the present invention comprises a valve body 2 equipped with at least one first conduit 5 and at least one second conduit 6, at least one plug 3 equipped with at least one through conduit 7 inside it and rotatably housed in a cavity 4 of the valve body 2 for its rotation between at least one open position of the valve and at least one closed position of the valve.

Preferably, the first and second conduits 5 and 6 comprise at least one threaded portion, which allows their constraint to pipes, fittings, collars or similar means for conveying fluids.

For the sake of simplicity, reference will be made to embodiments in which the first conduit 5 is the fluid inlet conduit, and the second conduit 6 is the fluid outlet conduit. It shall be evident to those skilled in the art, as better discussed below, that the present description also applies to cases in which the fluid flow is reversed in relation to what is shown in the figures and described here.

As already set forth, the valve 1 according to the present invention can be used with any type of fluid, both liquids and gases, and according to a preferred use implementation, it is used to shut off water, in distribution systems for domestic or industrial use.

The plug 3, preferably of the ball type, can be rotated inside the cavity 4, since it is constrained to a driving shaft or stem 15, which connects it to an actuating element 16 typically in the form of a knob or handle.

Typically, the plug 3 has at least three openings 7a, 7b, 7c. The openings 7a, 7b are opposite each other and are typically coaxial. The openings 7a and 7b are typically placed at the ends of the through conduit 7.

In the open position of the valve, the openings 7a and 7b are aligned with the conduits 5, 6, so that the fluid flow fed to the valve 1 passes through the conduit 5, passes through the through conduit 7 of the plug 3 until it reaches the second conduit 6 thereof. In other words, the through conduit 7 fluidically connects the first conduit 5 with the second conduit 6 in the open position of the valve.

On the contrary, in the closed position of the valve, the fluid is prevented from flowing out of the second conduit 6 by means of the plug 3.

In the closed position, the through conduit 7 is arranged perpendicular to the axis defined by the inlet and outlet conduits 5 and 6, in such a way that the passage of the fluid through the valve is prevented.

The presence of a bypass channel 8, which directly connects the first conduit 5 with the second conduit 6, guarantees a quantity of fluid to pass even when the valve is in the closed position.

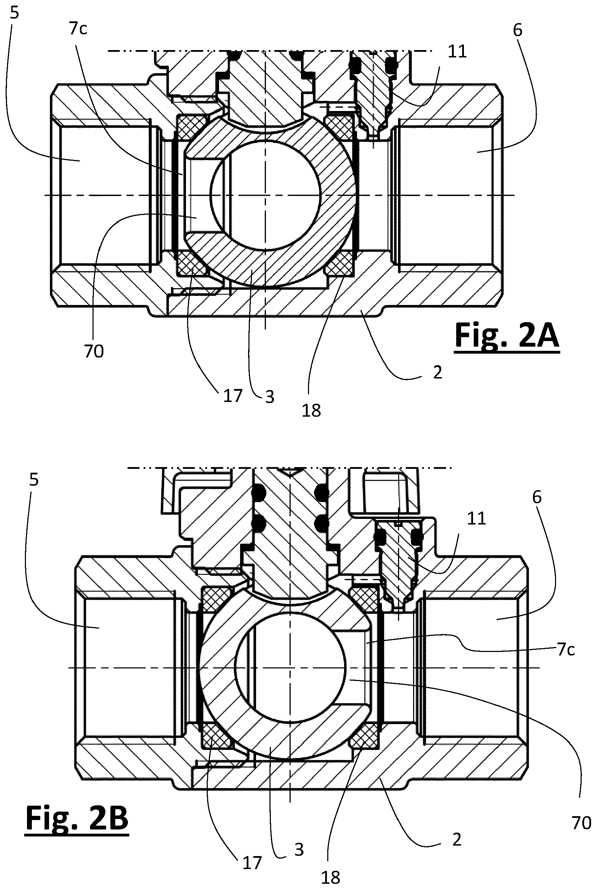

According to a preferred aspect, the three openings 7a, 7b and 7c are arranged so as to define a secondary conduit 70 which branches off from the through conduit 7. Preferably, the secondary conduit defines a "T" inside the plug. Therefore, the through conduit 7 defines the upper length of the "T", while the secondary conduit 70 branches off orthogonally from the through conduit 7 so as to define the body of the "T". In general, the openings 7a and 7b allow the fluid to pass from the first conduit 5 to the second conduit 6 when the valve is open. On the contrary, when the plug 3 is arranged in a closed position of the valve, the opening 7c is aligned with the first conduit 5 (fig. 2A) or with the second conduit 6 (fig. 2B), whereas the two openings 7a and 7b will be arranged perpendicularly to the axis X defined by the first and second conduits 5 and 6. Preferably, in the condition of figure 2A, when the opening 7c is aligned with the first conduit 5, the opening of the valve, i.e. a further displacement of the plug 3 are allowed only to a qualified operator who, for example, can operate on the valve 1 through a suitable tool not available to the ordinary user. As a result, two closed positions of the valve 1 are possible. In a first closed position of the valve, the opening 7c is arranged at the first conduit 5 and the fluid passing through the conduit 5 can enter the plug 3 through the opening 7c, and then it reaches the cavity 4 of the valve body by means of the openings 7a and 7b of the same conduit 7, thus ensuring for example the mentioned subsistence flow. In a second closed position, the opening 7c is arranged at the second conduit 6, the first conduit 5 is closed so as to prevent the inflow of fluid into the plug, thus allowing a full closure of the valve 1. It should be noted that embodiments with a single closed position, typically corresponding to the first closed position described above, are however possible.

The actuating element 16 is designed in such a way as to be able to operate the plug 3 so as to define the mentioned open and closed positions of the valve 1, and possibly also in a range of positions between the open position and the closed position of the valve 1. According to a possible embodiment, the fastening of the actuating element 16 to the stem 15 occurs through a screw of the tamper-proof type equipped with a special head, which can be screwed/unscrewed only by a suitable wrench.

As shown in the accompanying figures, inside the cavity 4 there are gaskets generally consisting of two rings 17 and 18 which support the plug 3, thus allowing its rotation and guaranteeing the fluidic seal thereof.

It should be noted that the substantially spherical plug 3 could be replaced by any other plug known in the art, capable of carrying out the same function.

Moreover, the valve according to the present invention comprises at least one bypass channel 8 for the direct or indirect fluidic connection of the first conduit 5 with the second conduit 6 of the valve, at least when the plug 3 is in at least one closed position of the valve. With reference to the embodiments described above, the bypass channel 8 allows a fluidic connection between the first conduit 5 and the second conduit 6 when the plug 3 is arranged in the first closed position of the valve 1, i.e. when the conduit 7c faces the first conduit 5.

Preferably, the bypass channel 8 is formed at least partially inside the body 2 of the valve so as not to determine a high increase in the dimensions and size of the valve 1.

As it shall be clearer in the following, the presence of a bypass channel 8 allows to ensure that a quantity of fluid passes from the first conduit 5 to the second conduit 6 even when the valve is placed in a closed position and the plug 3 inside it prevents the fluid to pass directly to the second conduit 6.

In particular, the bypass channel 8 allows the first and second conduits 5 and 6 of the valve 1 to be connected indirectly. The bypass channel 8 therefore connects the cavity 4 within which the plug 3 is housed with the second conduit 6. As previously discussed, in a closed position of the valve 1, fluidic connection between the first conduit 5 and the cavity 4 and, consequently, the second conduit 6 is possible.

As discussed, reference is made here to embodiments in which the first conduit 5 is the fluid inlet conduit and the second conduit 6 is the fluid outlet conduit. In this case, the regulation device 11 is placed downstream of the plug 3.

With particular reference to figure 2a, it should be noted that the present description applies in an obvious way for the person skilled in the art also to a possible alternative solution in which the second conduit 6 is the inlet conduit and the first conduit 5 is the outlet conduit. In this case, the regulation device 11 would be placed upstream of the plug 3, considering the fluid direction, however allowing a minimum fluid flow through the valve to be guaranteed in the closed position of the valve 1. In this case, in fact, the fluid would enter the second conduit 6, pass through the bypass conduit 8 to reach the cavity 4 and then enter the plug 4 through the opening 7a and/or the opening 7b, and exit from the opening 7c so as to reach the first conduit 5.

In particular, in preferred embodiments, in a closed position, the opening 7c of the plug 3 is arranged at the first conduit 5, so that the fluid can enter the plug through the opening 7c, and exit therefrom from the opening 7a and/or from the opening 7b, so as to reach the cavity 4. From the cavity 4, the fluid can flow within the bypass channel 8 so as to reach the second conduit 6.

As can be seen in the figures, the bypass channel 8 connecting the cavity 4 to the second conduit 6 is preferably made in such a way as to pass outside the gaskets 17 and 18 of the cavity in such a way that the fluid, which reaches the cavity 4 through the through conduit 7 of the plug 3, has the bypass channel 8 as the only way out.

According to the present invention, the valve 1 further comprises a flow cut-off and/or regulation device 11 (hereinafter also named for simplicity "regulation device 11") inside the bypass channel 8. Preferably, such regulation device 11 acts by reducing, or completely plugging, the passage section of the bypass channel 8.

In particular, one or more gaskets 11a can be arranged inside the seat 12 to guarantee the sealing of the regulation device 11. Preferably, these gaskets 11a are constrained to or made on the regulation device 11.

The presence of such regulation device 11 allows to obtain a regulation of the quantity of fluid that passes through the bypass channel 8 and which then flows between the cavity 4 and the second conduit 6 of the valve, when the latter is closed.

In preferred embodiments, such as those shown in the figures, the regulation device 11 is in the form of a grub screw adapted to at least partially obstruct the passage section of the bypass channel 8. As can be seen in the figures, the regulation device 11 is installed in a seat 12 having one end 12a arranged on the valve body 2.

Preferably, the seat 12 has at least one inner threaded portion adapted to cooperate with a corresponding threaded portion arranged on the outer surface of the regulation device 11 in such a way that it can be inserted in a controlled manner into the seat 12 and thus determine the desired obstruction of the passage section of the bypass channel 8.

The seat 12 preferably has an axis Y substantially parallel to the rotation axis R of the plug 3.

It should be noted that the seat 12, and thus the point in which the regulation device 11 acts to determine the full or partial obstruction of the passage section of the bypass channel 8, may be arranged at any point along the bypass channel 8.

As discussed, the seat 12 is made in the valve body 2 and has an end 12a arranged on, and outside, the valve body 2. This allows the regulation device 11 to be accessed from outside the valve 1. Such accessibility, under normal conditions of use, is however limited and preferably prevented by a covering cap 10 which at least partially covers the end 12a of the seat 12.

Such covering cap 10 is constrained to the driving shaft 15 so as to cover it at least partially. A portion of this covering cap 10 extends to the extent that it covers also the end 12a of the seat 12 of the regulation device 11.

Preferably, therefore, at least one portion of the covering cap 10, which can be arranged at the end 12a of the seat 12, is placed at a distance d1 from the rotation axis R of the plug 3, which is equal to or greater than the distance d2 between the axis Y of the seat 12 and the rotation axis R of the plug 3.

In a preferred shape, the covering cap 10 has a substantially circular section and is coaxial with the driving shaft 15. Therefore, considering the distance d1 as the diameter of this covering cap, such diameter is preferably equal to or higher than the mentioned distance d2 between the axis Y of the seat 12 and the rotation axis R of the plug 3.

In general, the covering cap 10 covers at least 50%, preferably at least 70% of the end 12a of the seat 12. In particular, considering a plane orthogonal to the rotation axis R of the plug 3, the projection of the end 12a on such plane defines a geometric figure. At least 50% of such figure is covered by the orthogonal projection of the covering cap 10 on such plane, preferably at least 70%.

The covering cap 10 is also preferably arranged at a distance d3 from the end 12, measured along a direction parallel to the rotation axis R of the plug 3, which is very small, preferably less than 1 cm, more preferably less than 0.3 cm, more preferably less than 0.1 cm.

Also, the covering cap 10 is typically constrained to the actuating element 16 so as to be rotatable therewith. It is therefore possible that the covering cap 10 covers the seat 12 only in some positions of the plug 3; preferably, however, the covering cap 10 covers the seat 12 in all the positions of the plug 3.

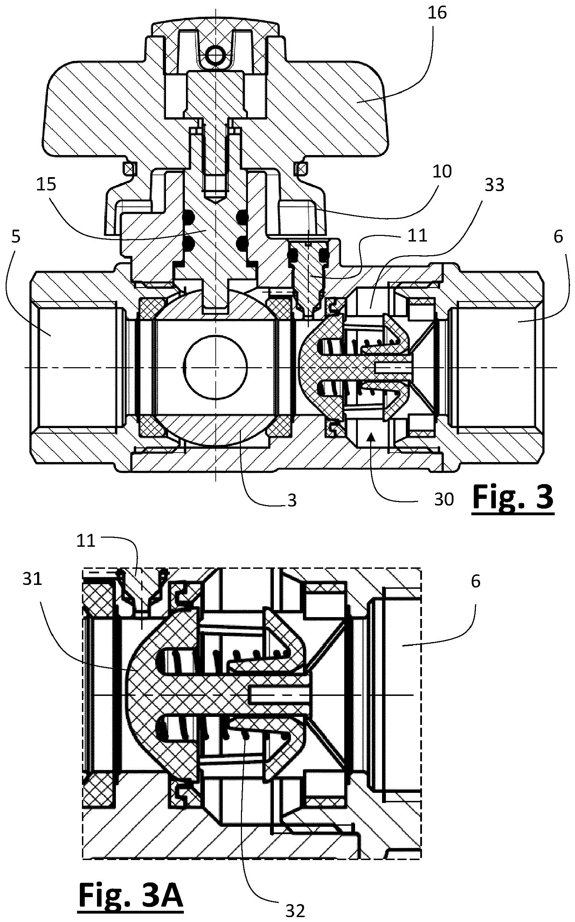

According to possible embodiments of the present invention, such as for example that shown in figures 3 and 3A, a valve 1 further comprises a shut-off device 30 for selectively shutting off the fluid flow in the valve, which allows the fluid to pass in one direction inside it and prevents it from passing in the opposite direction. Such shut-off device 30, known in the art as a "non-return" device of the fluid flow, is preferably arranged downstream of the plug 3 at the second conduit 6. It should be noted that in such embodiment, contrary to what has been previously shown, the fluid flow can occur only from the first conduit 5 to the second conduit 6. However, an alternative embodiment to that of figure 3 is possible, in which the regulation device is upstream of the plug 3, i.e. by connecting the first conduit 5 to the cavity 4.

In the illustrated embodiment, the shut-off device 30 allows the fluid to pass from the first conduit 5 toward the second conduit 6, thus preventing its return from the second conduit 6 toward the first conduit 5. Such device 30 comprises, for example, a piston 31 that is movable under the action of the fluid which, in detail, is displaced by overcoming the force of a countering spring 32 to cause the passage of the fluid in the conduit 6 exiting from the valve. The fluid flow in the opposite direction, i.e. from the second conduit 6 toward the first conduit 5, is prevented by means of the piston 31 which is kept in the closed position in the passage 33 through the spring 32 and thanks to the fluid pressure.

In normal use the valve 1 is open, so that the fluid can pass through the plug 3 and reach the second conduit 6 through the through conduit 7 of the plug 3.

In order to fully close the plug 3, the through conduit 7 is typically arranged orthogonally to the axis X of the conduits 5, 6. In this case, the opening 7c can be facing the first conduit 5 or the second conduit 6. If it is facing the second conduit 6, the fluid cannot enter the plug 3 and, therefore, cannot exit from the valve 1. If it is facing the first conduit 5, the fluid can reach the bypass conduit 8 through the cavity 4. In this case, the regulation device 11 must be operated so as to prevent the fluid flow through the bypass conduit 8. Similarly, if a minimum fluid flow must be guaranteed even in the closed position instead, for example the mentioned subsistence flow, it is possible to operate on the regulation device 8 so as to allow a reduced passing of fluid through the bypass conduit 8. As discussed, the operations on the regulation device 11 are normally prevented by the presence of the covering cap 10. Therefore, in order to operate on the regulation device, it is typically necessary to remove this covering cap 10, an operation which preferably, as discussed, requires the use of an accessory available only to an authorised operator and not commercially available. Typically, in fact, such accessory is necessary to remove the actuating device 16 constrained to (or made in one piece with) the covering cap 10. However, embodiments are possible in which the covering cap 10 can be released from the valve body 2 without the removal of the actuating device 16. Even in this case, it is preferable that this operation is possible by using an accessory available only to an authorised operator.

It should be noted that the regulation device 11 could already be set to the desired position, prior to the arrangement of the valve in the closed position.

The valve 1 preferably provides elements, which are known in the art, to lock the actuating device in the closed position when the bypass channel allows a reduced passage of fluid through the valve 1. Such locking is typically reversible only by an authorised operator (for example, owning a special tool). Preferably, such elements further allow only an authorised operator to lock the device. In other words, the ordinary user is prevented not only from opening the valve when the latter is in a condition of subsistence (or anyway of closure with minimum passage of fluid), but also from bringing the valve to such condition from an open position of the valve 1.

## Claims

1. A fluid flow shut-off valve (1), of the type comprising a main valve body (2) equipped with at least one first conduit (5) and at least one second conduit (6), which allow the inflow and outflow of fluid in and from said valve (1), at least one plug (3) equipped with at least one through conduit (7) and rotatably housed in at least one cavity (4) of said valve body (2) for its rotation between at least one open position of the valve and at least one closed position of the valve, said through conduit (7) placing said first conduit (5) in fluidic communication with said second conduit (6) in said open position of the valve, the fluid flow shut-off valve (1) comprising at least one bypass channel (8) for the direct or indirect fluidic connection of said first conduit (5) with said second conduit (6) of said valve at least when said plug (3) is in said at least one closed position of said valve, wherein in said at least one closed position of said valve, said plug (3) fluidically connects said first conduit (5) with said cavity (4) within which the plug (3) is housed, and wherein said bypass channel (8) fluidically connects said second conduit (6) with said cavity (4), in which there is a cut-off and/or regulation element (11) of the flow inside said bypass channel (8), housed in a respective seat (12) having a first end on said valve body (2), wherein said valve has a driving shaft (15) to drive said plug (3), said valve being **characterised by** further having a covering cap (10) to cover said driving shaft (15) constrained to the valve body such that, in at least one position of the plug, said covering cap covers at least partially said first end of said seat (12) of said cut-off and/or regulation element (11).

2. Valve according to claim 1, wherein said flow cut-off and/or regulation element (11) comprises at least one grub screw adapted to at least partially obstruct the passage section of said bypass channel (8).

3. Valve (1) according to one of the preceding claims, wherein said covering cap (10) is constrained to an actuating device (16), preferably in the form of a knob, of said driving shaft (15).

4. Valve (1) according to one of the preceding claims, wherein the axis (Y) of said seat (12) for said cut-off and/or regulation element (11) is arranged substantially parallel to the axis of said driving shaft (15).

5. Valve according to one of the preceding claims, wherein said covering cap covers at least partially said cut-off and/or regulation element in all plug positions.

6. Valve according to one of the preceding claims, wherein said covering cap covers at least 50%, preferably at least 70% of the end (12a) of said seat (12).

7. Valve according to one of the preceding claims, wherein the accessibility to the seat (12) is allowed for said cut-off and/or regulation element only after removing said covering cap from the body of said valve.

8. Valve according to one of the preceding claims, wherein said plug (3) comprises three openings (7a, 7b, 7c).

9. Valve according to any one of the preceding claims, **characterised by** comprising a shut-off device (30) for selectively shutting-off the fluid flow in said valve, said device (30) allowing the passage of said fluid in a direction inside said valve and preventing it from passing in the opposite direction.

10. Valve according to claim 9, wherein said shut-off device (30) for selectively shutting-off the fluid flow is arranged downstream of said plug (3) at said second conduit (6).

## Patentansprüche

1. Fluidströmungsabsperrventil (1) des Typs, aufweisend einen Hauptventilkörper (2), der mit mindestens einer ersten Leitung (5) und mindestens einer zweiten Leitung (6) ausgestattet ist, die das Einströmen und Ausströmen von Fluid in und aus dem Ventil (1) ermöglichen, mindestens einen Stopfen (3), der mit mindestens einer Durchgangsleitung (7) ausgestattet und drehbar in mindestens einem Hohlraum (4) des Ventilkörpers (2) für seine Drehung zwischen mindestens einer offenen Position des Ventils und mindestens einer geschlossenen Position des Ventils aufgenommen ist, wobei die Durchgangsleitung (7) die erste Leitung (5) in der offenen Position des Ventils in Fluidverbindung mit der zweiten Leitung (6) bringt, wobei das Fluidströmungsabsperrventil (1) mindestens einen Umgehungskanal (8) aufweist für die direkte oder indirekte Fluidverbindung der ersten Leitung (5) mit der zweiten Leitung (6) des Ventils zumindest dann, wenn sich der Stopfen (3) in der mindestens einen geschlossenen Position des Ventils befindet, wobei in der mindestens einen geschlossenen Position des Ventils der Stopfen (3) die erste Leitung (5) mit dem Hohlraum (4) fluidisch verbindet, in dem der Stopfen (3) untergebracht ist, und wobei der Umgehungskanal (8) die zweite Leitung (6) fluidisch mit dem Hohlraum (4) verbindet, bei dem ein Absperr- und/oder Regulierungselement (11) der Strömung innerhalb des Umgehungskanals (8) in einem jeweiligen Sitz (12) mit einem ersten Ende an dem Ventilkörper (2) untergebracht ist, wobei das Ventil eine Antriebswelle (15) zum Antreiben des Stopfens (3) aufweist, wobei das Ventil **dadurch gekennzeichnet ist, dass** es überdies eine Abdeckkappe (10) zum Abdecken der Antriebswelle (15), die an dem Ventilkörper gehalten ist, aufweist und dadurch, dass die Abdeckhaube in mindestens einer Position des Stopfens mindestens teilweise das erste Ende des Sitzes (12) des Absperr- und/oder Regulierungselements (11) abdeckt.

2. Ventil nach Anspruch 1, wobei das Absperr- und/oder Regulierungselement (11) mindestens eine Madenschraube aufweist, die dafür ausgelegt ist, den Durchgangsabschnitt des Umgehungskanals (8) zumindest teilweise zu behindern.

3. Ventil (1) nach einem der vorhergehenden Ansprüche, wobei die Abdeckkappe (10) auf eine Betätigungsvorrichtung (16), vorzugsweise in Form eines Knopfes, der Antriebswelle (15) beschränkt ist.

4. Ventil (1) nach einem der vorhergehenden Ansprüche, wobei die Achse (Y) des Sitzes (12) für das Absperr- und/oder Regulierungselement (11) im Wesentlichen parallel zur Achse der Antriebswelle (15) angeordnet ist.

5. Ventil nach einem der vorhergehenden Ansprüche, wobei die Abdeckkappe in allen Steckstellungen zumindest teilweise das Absperr- und/oder Regulierungselement abdeckt.

6. Ventil nach einem der vorhergehenden Ansprüche, wobei die Abdeckkappe mindestens 50 %, vorzugsweise mindestens 70 % des Endes (12a) des Sitzes (12) abdeckt.

7. Ventil nach einem der vorhergehenden Ansprüche, wobei die Zugänglichkeit zu dem Sitz (12) für das Absperr- und/oder Regulierungselement nur nach dem Entfernen der Abdeckkappe von dem Körper des Ventils ermöglicht wird.

8. Ventil nach einem der vorhergehenden Ansprüche, wobei der Stopfen (3) drei Öffnungen (7a, 7b, 7c) aufweist.

9. Ventil nach einem der vorhergehenden Ansprüche, **dadurch gekennzeichnet, dass** es eine Absperrvorrichtung (30) zum selektiven Absperren des Fluidstroms in dem Ventil aufweist, wobei die Vorrichtung (30) den Durchgang des Fluids in einer Richtung innerhalb des Ventils erlaubt und verhindert, dass es in der entgegengesetzten Richtung verläuft.

10. Ventil nach Anspruch 9, wobei die Absperrvorrichtung (30) zum selektiven Absperren des Fluidstroms stromabwärts des Stopfens (3) an der zweiten Leitung (6) angeordnet ist.

## Revendications

1. Soupape d'arrêt d'écoulement de fluide (1), du type comprenant un corps de soupape principal (2) équipé d'au moins un premier conduit (5) et d'au moins un second conduit (6), qui permettent l'entrée et la sortie de fluide dans et hors de ladite soupape (1), au moins un bouchon (3) équipé d'au moins un conduit traversant (7) et logé de manière rotative dans au moins une cavité (4) dudit corps de soupape (2) pour sa rotation entre au moins une position ouverte de la soupape et au moins une position fermée de la soupape, ledit conduit traversant (7) plaçant ledit premier conduit (5) en communication fluidique avec ledit second conduit (6) dans ladite position ouverte de la soupape, la soupape d'arrêt d'écoulement de fluide (1) comprenant au moins un canal de dérivation (8) pour la connexion fluidique directe ou indirecte dudit premier conduit (5) avec ledit second conduit (6) de ladite soupape au moins lorsque ledit bouchon (3) est dans ladite au moins une position fermée de ladite soupape, où, dans ladite au moins une position fermée de ladite soupape, ledit bouchon (3) connecte fluidiquement ledit premier conduit (5) à ladite cavité (4) dans laquelle le bouchon (3) est logé, et où ledit canal de dérivation (8) connecte fluidiquement ledit second conduit (6) à ladite cavité (4), où il y a un élément de coupure et/ou de régulation (11) de l'écoulement à l'intérieur dudit canal de dérivation (8), logé dans un siège respectif (12) ayant une première extrémité sur ledit corps de soupape (2), où ladite soupape a un arbre d'entraînement (15) pour entraîner ledit bouchon (3), ladite soupape étant **caractérisée en ce qu'**elle a en outre un capuchon de recouvrement (10) pour couvrir ledit arbre d'entraînement (15) contraint au corps de soupape de telle sorte que, dans au moins une position du bouchon, ledit capuchon de recouvrement couvre au moins partiellement ladite première extrémité dudit siège (12) dudit élément de coupure et/ou de régulation (11).

2. Soupape selon la revendication 1, dans laquelle ledit élément de coupure et/ou de régulation d'écoulement (11) comprend au moins une vis sans tête adaptée pour obstruer au moins partiellement la section de passage dudit canal de dérivation (8).

3. Soupape (1) selon l'une des revendications précédentes, dans laquelle ledit capuchon de recouvrement (10) est contraint à un dispositif d'actionnement (16), de préférence sous forme de bouton, dudit arbre d'entraînement (15).

4. Soupape (1) selon l'une des revendications précédentes, dans laquelle l'axe (Y) dudit siège (12) pour ledit élément de coupure et/ou de régulation (11) est disposé sensiblement parallèlement à l'axe dudit arbre d'entraînement (15).

5. Soupape selon l'une des revendications précédentes, dans laquelle ledit capuchon de recouvrement recouvre au moins partiellement ledit élément de coupure et/ou de régulation dans toutes les positions de bouchon.

6. Soupape selon l'une des revendications précédentes, dans laquelle ledit capuchon de recouvrement recouvre au moins 50%, de préférence au moins 70% de l'extrémité (12a) dudit siège (12).

7. Soupape selon l'une des revendications précédentes, dans laquelle l'accessibilité au siège (12) n'est permise pour ledit élément de coupure et/ou de régulation qu'après avoir retiré ledit capuchon de recouvrement du corps de ladite soupape.

8. Soupape selon l'une des revendications précédentes, dans laquelle ledit bouchon (3) comprend trois ouvertures (7a, 7b, 7c).

9. Soupape selon l'une quelconque des revendications précédentes, **caractérisée en ce qu'**elle comprend un dispositif d'arrêt (30) pour arrêter sélectivement l'écoulement de fluide dans ladite soupape, ledit dispositif (30) permettant le passage dudit fluide dans une direction à l'intérieur de ladite soupape et l'empêchant de passer dans la direction opposée.

10. Soupape selon la revendication 9, dans laquelle ledit dispositif d'arrêt (30) pour arrêter sélectivement l'écoulement de fluide est disposé en aval dudit bouchon (3) au niveau dudit second conduit (6).
